(19) Europäisches Patentamt / European Patent Office / Office européen des brevets

(11) **EP 4 723 077 A1**

(12) **EUROPEAN PATENT APPLICATION**
published in accordance with Art. 153(4) EPC

(43) Date of publication:
**08.04.2026 Bulletin 2026/15**

(21) Application number: **24830070.9**

(22) Date of filing: **11.04.2024**

(51) International Patent Classification (IPC):
**G08G 1/01** (2006.01)

(52) Cooperative Patent Classification (CPC):
**G06F 18/2415; G06N 3/04; G06N 3/084; G08G 1/01; H04W 24/08**

(86) International application number:
**PCT/CN2024/087322**

(87) International publication number:
**WO 2025/001420 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 CN 202310770982**

(71) Applicant: ZTE CORPORATION
**Shenzhen, Guangdong 518057 (CN)**

(72) Inventors:
• ZHOU, Xianwen
  Shenzhen, Guangdong 518057 (CN)
• LIU, Qiaoyan
  Shenzhen, Guangdong 518057 (CN)
• WANG, Kai
  Shenzhen, Guangdong 518057 (CN)
• LI, Jianguo
  Shenzhen, Guangdong 518057 (CN)

(74) Representative: **Ziebig Hengelhaupt Intellectual Property Attorneys**
**Patentanwaltskanzlei PartGmbB**
**Leipziger Straße 49**
**10117 Berlin (DE)**

(54) **TRAFFIC CONDITION PREDICTION METHOD, CLASSIFICATION MODEL TRAINING METHOD, AND MEDIUM**

(57)    The present application discloses a traffic condition prediction method, a classification model training method, and a computer-readable storage medium. The method includes: (S10), obtaining cell load data and user terminal handover data of a target cell during a target time period, the target cell is a cell where a signal covers the target road segment; (S20), constructing a target feature vector based on the cell load data and the user terminal handover data; and (S30), inputting the target feature vector into a preset classification model for identification to obtain the congestion level of the target road segment during the target time period. The preset classification model is obtained by training using the feature vectors constructed from the cell load data and the user terminal handover data as input data and label data constructed from the actual congestion level of the road segments covered by the cell as training labels.

obtaining cell load data and user terminal handover data of a target cell during a target time period, the target cell is a cell where a signal covers a target road segment — S10

constructing a target feature vector based on the cell load data and the user terminal handover data — S20

inputting the target feature vector into a preset classification model for identification to obtain the congestion level of the target road segment during the target time period. The preset classification model is obtained by training using the feature vector constructed from the load data and user terminal handover data of the cell as model input data and label data constructed from the actual congestion level of the road segment covered by the cell as a model training label — S30

FIG. 1

EP 4 723 077 A1

**Description**

**CROSS-REFERENCE TO RELATED APPLICATIONS**

The present application claims priority to Chinese Patent Application No. 202310770982.1, filed June 27, 2023, the entire contents of which are incorporated herein by reference.

**TECHNICAL FIELD**

The present application relates to the technical field of communication, and in particular to a traffic condition prediction method, a classification model training method, and a computer-readable storage medium.

**BACKGROUND**

Currently, common traffic condition sensing technologies mainly include camera technology, microwave radar technology, and global positioning system (GPS) technology. These technologies enable accurate, real-time, and comprehensive monitoring and analysis of traffic conditions. However, these technologies also have many drawbacks, such as dependence on the number and location of cameras and susceptibility to weather conditions. In particular, due to economic costs, the limited number of cameras deployed in the transportation network cannot achieve comprehensive monitoring and sensing of road conditions, especially on highways where cameras struggle to provide complete coverage.

**SUMMARY**

In a first aspect, the present application provides a traffic condition prediction method, including: acquiring cell load data and user terminal handover data of a target cell during a target time period, where the target cell is a cell where signal covers a target road segment; constructing a target feature vector based on the cell load data and the user terminal handover data; and inputting the target feature vector into a preset classification model for identification to obtain a congestion level of the target road segment during the target time period, where the preset classification model is obtained by training using a feature vector constructed from the cell load data and the user terminal handover data as model input data and label data constructed from an actual congestion level of a road segment covered by a cell as a model training label.

In a second aspect, the present application provides a classification model training method, including: acquiring a sample dataset, where the sample dataset includes a plurality of sample data, each piece of sample data includes cell load data and user terminal handover data of a cell during a time period, and an actual congestion level of a road segment covered by a cell signal; constructing a feature vector based on the cell load data and the user terminal handover data in each piece of sample data, and constructing label data based on the actual congestion level in each piece of sample data; and training a classification mode to be trained using the feature vector corresponding to each piece of sample data are used as model input data and the label data corresponding to each piece of sample data as a model training label to obtain a target classification model for predicting a road congestion level.

In a third aspect, the present application further provides a computer-readable storage medium, a traffic condition prediction program is stored on the computer-readable storage medium, when the traffic condition prediction program is executed by a processor, the traffic condition prediction method as described above is implemented.

**BRIEF DESCRIPTION OF THE DRAWINGS**

FIG. 1 is a flowchart illustrating a traffic condition prediction method according to a first embodiment of the present application.
FIG. 2 is a flowchart illustrating the traffic condition prediction method according to a second embodiment of the present application.
FIG. 3 is a schematic diagram illustrating training and a storage system architecture of a classification model in a classification model training method according to an embodiment of the present application.
FIG. 4 is a schematic structural diagram of the classification model in the classification model training method according to an embodiment of the present application.
FIG. 5 is a schematic structural diagram of a traffic condition prediction device according to an embodiment of the present application.
FIG. 6 is a schematic structural diagram of a classification model training device according to an embodiment of the present application.
FIG. 7 is a schematic diagram of a computer-readable storage medium according to an embodiment of the present application.
FIG. 8 is a schematic diagram of another computer-readable storage medium according to an embodiment of the present application.

The realization of the purpose, functional features and advantages of the present application will be further explained in conjunction with the embodiments and with reference to the accompanying drawings.

**DETAILED DESCRIPTION OF THE EMBODIMENTS**

The specific embodiments described herein are merely illustrative and not intended to limit the scope of the present application.

Based on the above structure, various embodiments of the traffic condition prediction method are proposed.

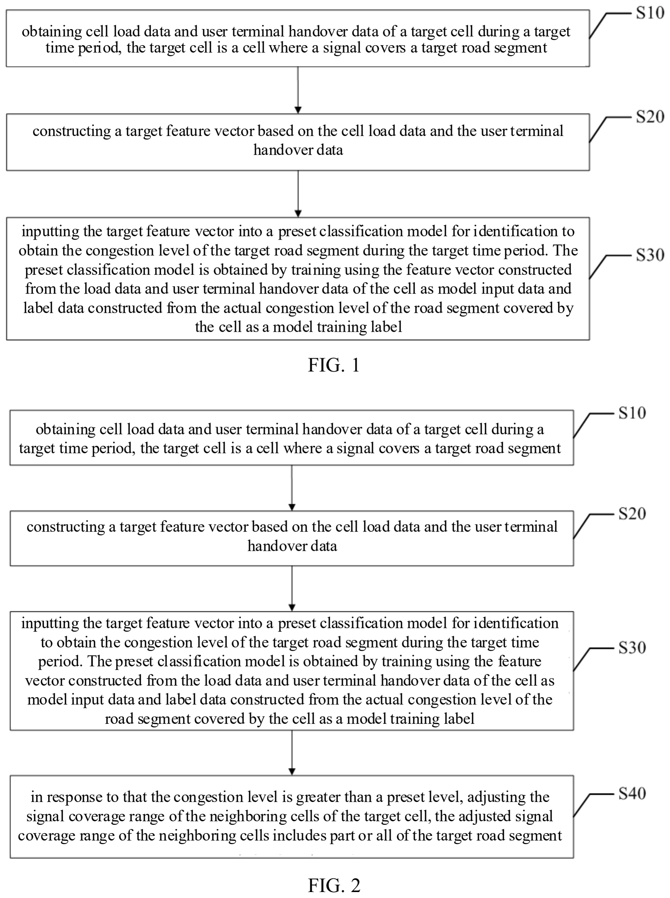

Referring to FIG. 1, FIG. 1 is a flowchart illustrating the traffic condition prediction method according to a first embodiment of the present application, the present application provides an embodiment of the traffic condition prediction method. Although a logical order is shown in the flowchart, in some cases, the steps shown or described may be performed in a different order than that shown here. This embodiment does not limit the executing entity of the traffic condition prediction method; for example, it may be a network element device, a personal computer, a server, a smartphone, etc. For ease of description, the following embodiments are described using the prediction device as the executing entity. In this embodiment, the traffic condition prediction method includes:

Step S10, obtaining cell load data and user terminal handover data of a target cell during a target time period, the target cell is a cell where a signal covers a target road segment.

The road segment for which traffic conditions need to be predicted is referred to as the target road segment for distinction. The traffic condition prediction method in this embodiment is applicable to any road segment for which traffic conditions need to be predicted. The following explanation uses a target road segment as an example. There are many ways to determine the target road segment, which is not limited in this embodiment. For example, it can be pre-selected manually and configured in the prediction device, or can be obtained by the prediction device dividing each road according to road network data. In an embodiment, road segments divided by highways can be used as target road segments, and road condition prediction can be performed on the target road segments to specifically address the problem that cameras on highways cannot achieve comprehensive monitoring and perception of road conditions.

The cell refers to a communication cell, such as a cellular cell. The application environment in this embodiment can be, but is not limited to, a long term evolution/new radio (LTE/NR) network environment; that is, the cell can refer to a cell within an LTE/NR network environment. The cell where the signal covers the target road segment is considered the target cell. The signal of the target cell can cover part or all of the target road segment; that is, it is not necessarily a cell where signal covers the entire target road segment that is considered the target cell. In an embodiment, if the signals of two or more cells cover the target road segment, each cell can be designated as the target cell, or the cell with the largest signal coverage area of the target road segment can be designated as the target cell. There are many ways to determine the target cell, which is not limited in this embodiment. For example, the target cell can be manually determined in advance based on the signal coverage range of each cell and the selected target road segment and configured in the prediction device, or can be determined by the prediction device based on the signal coverage range of each cell in the configured cell information and the selected target road segment. For example, in an embodiment, the prediction device can obtain cell information, which includes the signal coverage range of each cell. The prediction device identifies the cells where signal coverage range includes the target road segment as the target cells corresponding to that target road segment.

If it is necessary to predict the congestion situation of the target road segment during a certain time period, that time period is referred to as the target time period for distinction. The traffic condition prediction method in this embodiment is applicable to predicting the congestion situation of the target road segment during any time period. The following explanation uses a target time period as an example. There are many ways to determine the target time period, which is not limited in this embodiment. For example, the target time period can be pre-selected manually and configured in the prediction device, or can be divided by a time period division rule set by the prediction device.

The prediction device can obtain cell load data and user equipment (UE) handover data for the target cell during the target time period.

The cell load data is data that can reflect the load level of the target cell during the target time period. However, in this embodiment, it is not limited to which specific data items the cell load data includes. In an embodiment, the prediction device can be set as needed to acquire which data that can reflect the load level of the target cell during the target time period. The more congested the target road segment, the more users will use the communication services provided by the target cell within the target road segment, and the higher the load level of the target cell will be. Conversely, the smoother the target road segment, the fewer users will use the communication services provided by the target cell within the target road segment, and the lower the load level of the target cell will be. Therefore, the cell load data of the target cell is related to the congestion of the target road segment.

For example, in an embodiment, the cell load data may include at least one of the following: average number of connected users in the cell radio resource control (RRC), number of active users, uplink medium access control (MAC) layer traffic, downlink MAC layer traffic, and permeable reactive barrier (PRB) utilization.

The user terminal handover data is data that can reflect the number of users switching into or out of the target cell during the target time period. However, in this embodiment, there is no limitation on which specific data items the user terminal handover data includes. In an embodiment, the prediction device can be set as needed to acquire which data reflecting the number of users switching into or out of the target cell during the target time period. The more congested the target road segment, the more users will use the communication services provided by the target cell within the target road segment, and the slower the users will move. As a result, the longer the users stay within the signal coverage area of the target cell, the fewer users will switch into or out of the target cell during the target time period. Conversely, the smoother the target road segment, the fewer users will use the communication services provided by the target cell within the target road segment, and the faster the users will move. As a result, the shorter the time users stay within the signal coverage area of the target cell, the more users will switch into or out of the target cell during the target time period. Therefore, the user terminal handover data of the target cell is related to the congestion of the target road segment.

For example, in an embodiment, the user terminal handover data may include at least one of the following: the number of times the user terminal successfully enters the target cell, the number of times the user successfully leaves the target cell, the number of times the user requests to enter the target cell, and the number of times the user requests to leave the target cell.

In this embodiment, the method by which the prediction device obtains cell load data and user terminal handover data is not limited, which can be set as needed. For example, in an embodiment, the data can be obtained from a network element module, a network management module, or a data service module.

Step S20, constructing a target feature vector based on the cell load data and the user terminal handover data.

After obtaining the cell load data and the user terminal handover data of the target cell during the target time period, the prediction device can construct the feature vector (hereinafter referred to as the target feature vector for distinction) using the cell load data and user terminal handover data. In an embodiment, there are many ways to construct the target feature vector, which is not limited in this embodiment, and it can be set as needed. For example, in an embodiment, the step S20 includes:

step S201, preprocessing each data item in the cell load data and the user terminal handover data respectively to obtain the features corresponding to each data item.

The cell load data includes at least one data item, and the user terminal handover data includes at least one data item. The prediction device preprocesses each data item in the cell load data and the user terminal handover data to obtain the features corresponding to each data item. The data preprocessing method is not limited in this embodiment. For example, in an embodiment, preprocessing may include normalization processing.

Step S202, combining the features corresponding to each data item to obtain the target feature vector.

The prediction device combines the features corresponding to each data item to obtain the target feature vector. For example, when there are M data items, the target feature vector can be represented as $X = [x_1, x_2, ..., x_M]$, wherein xi, i $\in$ {1, ..., M} represents the feature corresponding to each data item.

Step S30, inputting the target feature vector into a preset classification model for identification to obtain the congestion level of the target road segment during the target time period. The preset classification model is obtained by training using the feature vector constructed from the load data and user terminal handover data of the cell as model input data and label data constructed from the actual congestion level of the road segment covered by the cell as a model training label.

The preset classification model can be pre-trained and configured in the prediction device. In this embodiment, there are no restrictions on the model structure and training method of the preset classification model. For example, the model structure can be a commonly used classification model structure, such as a logistic regression model, a decision tree model, a support vector machine model (SVM), etc. There are also no restrictions on the training method of the preset classification model; for example, a supervised training method can be used. By using the feature vector constructed from the cell load data and the user terminal handover data related to road congestion as model input data, and using the label data constructed from the actual congestion levels of the road segments covered by the cell as the model training label, the preset classification model can learn a mapping relationship between the feature vector constructed from the cell load data and the user terminal handover data and the actual congestion level of the road segment. This allows the model to accurately identify the congestion level of the target road segment during the target time period based on the input target feature vector, using the mapping relationship learned in the preset classification model. Multiple congestion levels (hereinafter referred to as preset congestion levels) can be preset to represent different degrees of congestion on the road segments. The number of preset congestion levels can be set as needed and is not limited here. For example, two preset congestion levels can be set: one for congested traffic and one for smooth traffic. The actual congestion level of the road segment is one of the preset congestion levels.

Since the cell load data can reflect the number of users in the cell and further reflect the number of users on the road segments covered by the cell's signal, and the cell user terminal handover data can reflect the handover situation of the user between cells and further reflect the flow speed of users on the road segments covered by the cell's signal, this embodiment combines wireless communication network data such as cell load data and user terminal handover data with a machine learning model to predict the congestion level of the road segments, enabling accurate and real-time monitoring and perception of road conditions. Furthermore, there is no need to install cameras on the road segments; it can be achieved by utilizing the cells deployed in the mobile communication network, thus enabling accurate and real-time monitoring and perception of road conditions even in areas without cameras.

Based on the first embodiment described above, a second embodiment of the traffic condition prediction method of the present application is proposed. Referring to FIG. 2, in this embodiment, after the step S30, the method further includes: step S40, in response to that the congestion level is greater than a preset level, adjusting the signal coverage range of the neighboring cells of the target cell, the adjusted signal coverage range of the neighboring cells includes part or all of the target road segment.

After identifying the congestion level of the target road segment during the target time period, the predictive device can compare the congestion level with the preset level. The preset level is a level set in advance as needed, so that when the congestion level is higher than the preset level, it indicates that the target road segment is heavily congested, and the number of users within the target road segment exceeds the number of users the target cell can handle. In response to that the congestion level exceeds the preset level, the predictive device can adjust the signal coverage of neighboring cells of the target cell, ensuring that the adjusted signal coverage of neighboring cells includes part or all of the target road segment. There are many ways to adjust the signal coverage of neighboring cells, which is not limited in this embodiment. For example, in an embodiment, the signal coverage weights of neighboring cells can be adjusted towards the target cell to extend the signal coverage of neighboring cells to include part or all of the target road segment.

In this embodiment, when the target road segment within the target cell is congested and the number of users within the target road segment exceeds the number of users the target cell can handle, the signal coverage of the neighboring cells of the target cell is adjusted to include part or all of the target road segment. This allows the neighboring cells of the target cell to share the load of the target cell, thereby achieving "network follows service", adaptively balancing the service load between cells, and improving the user experience in congested cells.

Based on the first and/or second embodiments described above, a third embodiment of the traffic condition prediction method of the present application is proposed. In this embodiment, the preset classification model includes an input layer, at least one hidden layer, and an output layer. The step S30 includes:

step S301, inputting the target feature vector into the hidden layer through the input layer.

In this embodiment, a feasible model structure for the preset classification model is proposed, including an input layer, at least one hidden layer, and an output layer. The input layer is the first layer of the neural network, used to receive input signals (values) and pass them to the next layer, i.e., the hidden layer in this embodiment, but does not perform any operations on the input signals (values). The neurons (nodes) of the hidden layer transform the input data in different ways; a hidden layer is a vertically stacked set of neurons. The output layer is the last layer of the neural network, used to receive input from the last hidden layer and output a value within a reasonable range.

After constructing the target feature vector, the prediction device inputs the target feature vector into the hidden layer through the input layer.

Step S302, after processing the input vector through the hidden layer, inputting the processed vector into the output layer.

After inputting the target feature vector into the hidden layer, the prediction device processes the input vector through the hidden layer. The specific processing method will vary depending on the combination of neurons in the hidden layer; this is not limited in this embodiment. After processing the input vector through the hidden layer, a vector is also obtained. The prediction device then inputs the processed vector into the output layer.

Step S303, identifying, via the output layer, the input vector to obtain the congestion level of the target road segment during the target time period.

The prediction device obtains the congestion level of the target road segment during the target time period by identifying the vector input to the output layer via the output layer.

In an embodiment, during the training of the preset classification model, it is necessary to update and optimize the model parameters of each layer in the preset classification model, so that the preset classification model can accurately predict the congestion level of the road segment covered by the cell based on the input feature vector (a feature vector constructed based on the cell load data and the user terminal handover data).

In an embodiment, the step S302 includes: step S3021, after linearly processing the input vector through the weight matrix of the neurons in the hidden layer, activating, via the activation function in the hidden layer, the linearly processed vector.

In this embodiment, a feasible processing method for the input vector in the hidden layer is proposed. When there are multiple hidden layers, the prediction device inputs the target feature vector into the first hidden layer through the input layer. After the first hidden layer processes the vector, it inputs the processed vector into the second hidden layer. After the second hidden layer processes the vector, it inputs the processed vector into the third hidden layer, and so on. Each hidden layer processes the input vector in the same way, only the number of neurons and their weights differ between hidden layers. Taking a single hidden layer as an example, the prediction device can linearly process the input vector through the weight matrix of the neurons in the hidden layer, then activate the linearly processed vector through the activation function in the hidden layer, and finally input the activated vector into the next layer.

The activation function can be set as needed; in this embodiment, there are no restrictions. For example, sigmoid, tanh, Relu, etc., can be used.

Step S3022, inputting the vector obtained after activation processing of the last hidden layer into the output layer.

The prediction device inputs the vector obtained after activation processing of the last hidden layer into the output layer.

When the preset classification model has only one hidden layer, the target feature vector is input into this hidden layer through the input layer, and then the input vector is processed through this hidden layer. The processed vector is then input into the output layer.

In an embodiment, the step S303 includes: step S3031, linearly processing, via the weight matrix of the neurons in the output layer, the input vector to obtain the output value corresponding to each preset congestion level.

In this embodiment, a feasible method for identifying the congestion level is proposed, which involves using the output layer to identify the input vector. The output layer includes neurons and a normalization function. The number of neurons is configured to be the same as the number of preset congestion levels, ensuring that the output value corresponds to each preset congestion level. The prediction device can linearly process the input vector through the weight matrix of the neurons in the output layer to obtain the output value corresponding to each preset congestion level.

Step S3032, normalizing, via the normalization function in the output layer, the output value corresponding to each preset congestion level to obtain the probability that the target road segment belongs to each preset congestion level during the target time period.

The prediction device normalizes the output value corresponding to each preset congestion level through the normalization function in the output layer to obtain the probability that the target road segment belongs to each preset congestion level during the target time period. The normalization function can be any function set as needed; in this embodiment, there is no restriction on which normalization function is used. For example, the softmax function can be used.

$$y_i = soft\max(y_i) = \frac{e^{y_i}}{\sum_{j=1}^{C} e^{y_j}}, i = 1, 2, ..., C$$

$y_1, y_2, ..., y_C$ correspond to the output values of C neurons in the output layer, representing the probability that the target road segment belongs to one of the C preset congestion levels during the target time period. Since the output layer vector Y may not necessarily satisfy the mathematical properties of a probability distribution, that is, the sum of the dimensions of the Y vector may not equal 1, a normalization operation is performed to convert Y into a probability distribution vector.

Step S3033, determining the congestion level of the target road segment during the target time period from the preset congestion levels based on the probabilities.

The prediction device determines the congestion level of the target road segment during the target time period from the preset congestion levels based on the probabilities. This embodiment does not limit the method for determining the congestion level based on the probability. For example, in an embodiment, the preset congestion level with the highest probability can be used as the congestion level of the target road segment during the target time period.

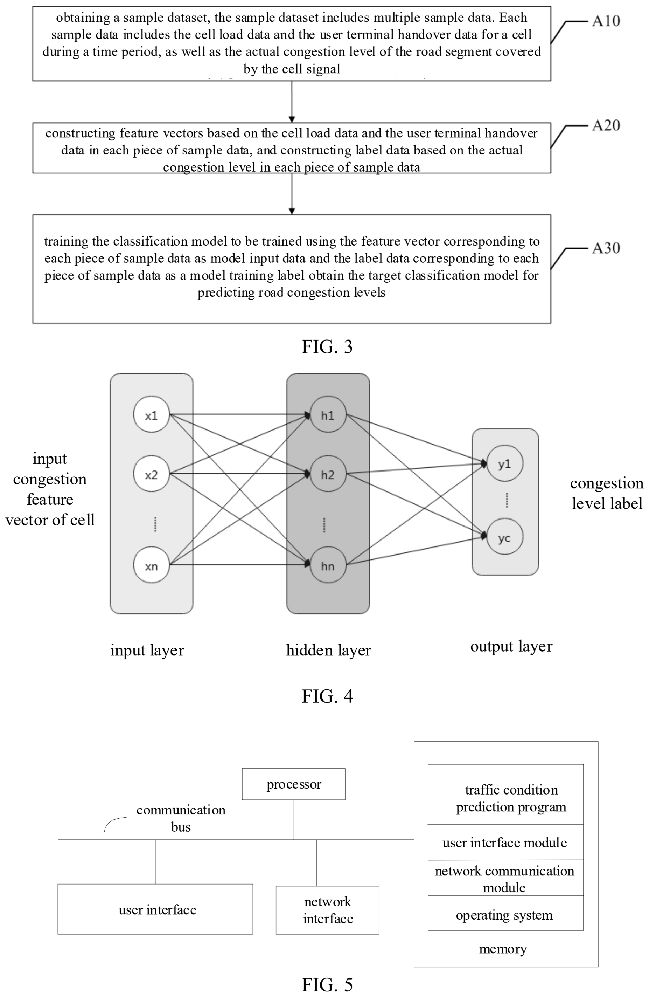

Based on the first, second, and/or third embodiments described above, a fourth embodiment of the classification model training method of the present application is proposed. This embodiment does not limit the executing entity of the classification model training method; for example, it can be a personal computer, server, smartphone, or other device. For ease of description, the following embodiments are described using the training device as the executing entity. The training device and the prediction device can be the same device or different devices, and can be set as needed, which is not limited in this embodiment. When the prediction device and the training device are different devices, after the target classification model is trained on the training device, it can be deployed to the prediction device. Referring to FIG. 3, in this embodiment, the classification model training method includes: step A10, obtaining a sample dataset, the sample dataset includes multiple sample data. Each piece of sample data includes the cell load data and the user terminal handover data for a cell during a time period, as well as the actual congestion level of the road segment covered by the cell signal.

In this embodiment, a feasible training method for a target classification model is proposed. This embodiment does not limit the method by which the training device obtains the sample dataset. For example, in an embodiment, the user can upload the sample dataset to the training device.

The sample dataset includes multiple sample data. Each piece of sample data includes the cell load data and the user terminal handover data for a cell during a time period, as well as the actual congestion level of the road segment covered by the cell signal. The duration of the time period can be set as needed, representing the time granularity of the sample data. For example, with minutes as the granularity, for a cell, a sample dataset can be obtained, consisting of the cell load data, the user terminal handover data and the actual congestion level during a time period of one minute. Multiple sample data can be obtained for a single cell, and multiple sample data can also be obtained for different cells. The sample data of each cell can be combined to obtain a sample dataset.

The actual congestion level of the road segment covered by the cell signal can be manually marked or obtained through other means, which is not limited in this embodiment.

Step A20, constructing feature vectors based on the cell load data and the user terminal handover data in each piece of sample data, and constructing label data based on the actual congestion level in each piece of sample data.

For each piece of sample data in the sample dataset, the training device can construct the feature vector (also called a "cell congestion feature vector") based on the cell load data and the user terminal handover data in that sample data, and construct the label data (also called a "congestion level label") based on the actual congestion level in that sample data. For example, in an embodiment, the label data can be constructed based on the actual congestion level by: pre-setting labels corresponding to each preset congestion level, for example, using C integers from 0 to (C-1) to represent each preset congestion level, where the number of C is determined by the number of preset congestion levels, and using the label corresponding to the actual congestion level as the label data constructed for that sample data. Without loss of generality, when two preset congestion levels are set, namely smooth traffic and congested traffic, 0 can be used as the label for smooth traffic and 1 as the label for congested traffic. For example, in an embodiment, the label data can be constructed using one-hot encoding. The number of preset congestion levels is C, and the label data is represented by a vector of length C. Each element in the vector corresponds to a preset congestion level. The element corresponding to the actual congestion level is set to 1, and the elements corresponding to other preset congestion levels are set to 0. This means that the probability that the road segment covered by the cell signal has the actual congestion level is 1, and the probability that it has the other preset congestion levels is 0.

The specific embodiment for the training device to construct the feature vectors based on the cell load data and the user terminal handover data in the sample data can refer to the specific embodiment for the prediction device to construct the target feature vectors based on the cell load data and the user terminal handover data of the target cell in the above embodiments, and will not be repeated here.

Step A30, training the classification model to be trained using the feature vector corresponding to each piece of sample data as model input data and the label data corresponding to each piece of sample data as a model training label obtain the target classification model for predicting road congestion levels.

The training device can pre-set a classification model to be trained. The model structure can be set as needed and is not limited here. The model parameters in the classification model can be initialized empirically or randomly. The training process is the process of optimizing the model parameters. The training device can use the feature vectors corresponding to each sample as model input data and the label data corresponding to each sample as model training labels to train the classification model to obtain the target classification model for predicting the road congestion levels.

In an embodiment, as shown in FIG. 4, the classification model structure can be configured to include an input layer, at least one hidden layer, and an output layer. The input layer includes M nodes, where M is the size of the feature vector, and is used to input the feature vector into the hidden layer. In an embodiment, there can be one hidden layer with K neurons. The output layer has C neurons and outputs the probability values of C categories. The weight matrix of the neurons in the hidden layer can be represented as $W_1$, with dimensions (K, M), and the weight matrix of the neurons in the output layer can be represented as $W_2$, with dimensions (C, K). The input feature vector is represented as $X = [x_1, x_2, ..., x_M]$. The mathematical formula for the classification model is expressed as follows:

$$Y = W_2 * W_1 * X + b$$

Where b is the bias vector. The physical meaning of matrices $W_1$ and $W_2$ is that they represent the weighted influence of different feature vectors in the road congestion level classification. $W_1$, $W_2$ and b are the model parameters that need to be optimized during training.

In an embodiment, cross-entropy can be used as the loss function for the model:

$$L = -\sum_{i=1}^{N} \sum_{j=1}^{C} y_{ij} \log\left(p_{ij}\right)$$

N represents the total number of input samples during training; C represents the number of preset congestion levels, i.e., the number of classifications in the model; $y_{ij}$ is a one-hot encoding vector indicating whether the i-th sample belongs to the j-th class; and $p_{ij}$ represents the prediction probability of the classification model that the i-th sample belongs to the j-th class. On the training sample set, by optimizing the model parameters using the gradient descent algorithm on the loss function L, the optimal model parameters for classifying road segment congestion levels can be obtained. The optimizer determines the convergence method of the gradient descent of the loss function for the model. In an embodiment, the optimizer can employ Adadelta, an adaptive learning rate method. During training, the batch size can be set as needed, for example, to 10 samples. The number of training epochs can also be set as needed, for example, to 100.

In an embodiment, to evaluate the effectiveness of the model application, the sample dataset can be divided into a training set and a test set, with the training set having a ratio of K, and the test set having a ratio of (1-K). Multiple iterative training processes are performed on the training set, and then the model's performance is evaluated on the test set. Finally, the optimal model that minimizes the loss function is obtained through training, and the trained model is saved for use by subsequent modules.

In an embodiment, the step A10 includes:
step A101, collecting the cell load data and the user terminal handover data of at least one cell during each hour segment from the network management module, the network element module or data service module. Each hour segment is obtained by dividing a time period of a preset duration according to a preset time granularity.

This embodiment proposes a feasible method for obtaining the sample dataset. The network element module is a functional module deployed within a network element device, which stores communication data of the network element device. The network management module refers to a network management module that manages multiple network element devices and stores the communication data of the multiple network element devices. The data service module is deployed on an external server, providing data computation and analysis services to the cell and storing communication data within the cell. Therefore, in this embodiment, the training device can collect the cell load data and the user terminal handover data of at least one cell within each hourly segment from the network management module, the network element module, or the data service model. Each hourly segment is obtained by dividing a time period of a preset duration according to a preset time granularity. The preset time granularity is a time granularity set in advance as needed, for example, it can be set to a minute granularity. The preset duration can be set as needed, for example, it can be set to one month. Thus, the training device can obtain the cell load data and the user terminal handover data of at least one cell per minute within one month.

In an embodiment, the training device can collect the cell load data and the user terminal handover data of a cell within a preset time period. The collected data can carry timestamp information, including but not limited to timestamp information with year/month/day/hour/minute granularity. Then, according to the preset time granularity, the collected data is divided into the cell load data and the user terminal handover data for each time period based on the timestamp information.

Step A102, collecting the actual congestion level of the road segments covered by the cell signal within each time period.

The training device can also collect the actual congestion level of the road segments covered by the cell signal within each time period. The collection method is not limited in this embodiment; for example, it can be obtained through manual labeling.

Step A103, obtaining a sample data based on the cell load data, the user terminal handover data, and the actual congestion level of the same cell collected within the same time period based on multiple sample data, and obtaining the sample dataset based on a plurality of the sample data.

The training device combines the cell load data, the user terminal handover data and the actual congestion level collected within the same time period into a single sample data. Based on the obtained data, the plurality of sample data can be combined to form a sample dataset.

In an embodiment, the step A102 includes:
step A1021, collecting surveillance video from the cameras installed on the road segments covered by the cell signal within each time period.

This embodiment proposes a feasible method for the training device to collect the actual congestion level of road segments covered by cell signals. When collecting the sample data, road segments covered by surveillance cameras can be selected, and then the cell load data and the user terminal handover data of the cells where signals cover the road segments can be collected, as well as surveillance videos from the cameras installed on these road segments within each time period.

Step A1022, performing image analysis on the surveillance video for each time period to obtain the actual congestion level of the road segments covered by the cell signal within each time period.

The training device can perform image analysis on the surveillance video for each time period, and obtain the actual congestion level of the road segment within each time period based on the image analysis results. The image analysis method is not limited in this embodiment; for example, image classification algorithms can be used to classify the images and obtain the actual congestion level.

Furthermore, the present application also proposes a traffic condition prediction device, which includes: a first acquisition module, configured to acquire cell load data and user terminal handover data of a target cell during a target time period, the target cell is a cell that provides signal coverage for the target road segment; a first construction module, configured to construct a target feature vector based on the cell load data and the user terminal handover data; and an identification module, configured to input the target feature vector into a preset classification model for identification to obtain the congestion level of the target road segment during the target time period. The preset classification model is obtained by training using the feature vector constructed from cell load data and the user terminal handover data as input data, and label data constructed from the actual congestion levels of the road segments covered by the cell as training labels.

In an embodiment, the traffic condition prediction device further includes an adjustment module, configured to adjust the signal coverage range of neighboring cells of the target cell in response to that congestion level exceeds a preset level. The adjusted signal coverage range of the neighboring cells includes part or all of the target road segment.

In an embodiment, the cell load data includes at least one of the following: average number of connected users under cell RRC, number of active users, uplink MRSC traffic, downlink MRSC traffic, and PRB utilization.

In an embodiment, the user terminal handover data includes at least one of the following: the number of times the user terminal successfully enters the target cell, the number of times the user successfully leaves the target cell, the number of times the user requests to enter to the target cell, and the number of times the user requests to leave the target cell.

In an embodiment, the first construction module is further configured to: preprocess each data item in the cell load data and the user terminal handover data to obtain the features corresponding to each data item; and combine the features corresponding to each data item to obtain the target feature vector.

In an embodiment, the preset classification model includes an input layer, at least one hidden layer, and an output layer. The identification module is further configured to: input the target feature vector into the hidden layer through the input layer; process the input vector through the hidden layer and input the processed vector into the output layer; and identify the the input vector through the output layer to obtain the congestion level of the target road segment during the target time period.

In an embodiment, the recognition module is further configured to: linearly process the input vector through the weight matrix of the neurons in the hidden layer, and activate the linearly processed vector through the activation function in the hidden layer; and input the vector obtained after the activation process of the last hidden layer into the output layer.

In an embodiment, the identification module is further configured to: linearly process the input vector through the weight matrix of the neurons in the output layer to obtain the output values corresponding to each preset congestion level; normalize the output values corresponding to each preset congestion level through the normalization function in the output layer to obtain the probability that the target road segment belongs to each preset congestion level during the target time period; and determine the congestion level of the target road segment in the target time period from each preset congestion level according to the probability.

Furthermore, the embodiment of the present application also proposes a classification model training device, including: a second acquisition module, configured to acquire a sample dataset, the sample dataset includes a plurality of sample data, each piece of sample data includes cell load data and user terminal handover data of a cell within a time period, as well as the actual congestion level of the road segment covered by the cell signal; a second construction module, configured to construct the feature vector based on the cell load data and the user terminal handover data in each of the sample data, and to construct label data based on the actual congestion level in each of the sample data; and the training module, configured to train the classification model to be trained by using the feature vector corresponding to each piece of sample data as the model input data and the label data corresponding to each piece of sample data as the model training label, to obtain the target classification model for predicting the road congestion level.

In an embodiment, the second acquisition module is further configured to: collect the cell load data and the user terminal handover data of at least one cell during each time period from the network management module, the network element module, or the data service module, each time period is obtained by dividing a time period of a preset duration according to a preset time granularity; collect the actual congestion level of the road segment covered by the cell signal during each time period; obtain a sample data based on the cell load data, the user terminal handover data, and the actual congestion level of the same cell collected during the same time period, and obtain the sample dataset based on a plurality of the sample data.

In an embodiment, the second acquisition module is further configured to: collect surveillance videos from surveillance cameras installed on the road segments covered by the cell signal during each time period; and perform image analysis on the surveillance videos during each time period to obtain the actual congestion level of the road segments covered by the cell signal during each time period.

The present application also provides a traffic condition prediction device, which includes a memory, a processor, and a traffic condition prediction program stored in the memory and executable on the processor. When the traffic condition prediction program is executed by the processor, the steps of the traffic condition prediction method described in the above embodiments are implemented. In an embodiment, as shown in FIG. 5, the traffic condition prediction device may further include a network interface, a user interface, and a communication bus. The communication bus is used to enable communication between these components. The user interface may include a display and an input unit such as a keyboard. The user interface may also include standard wired or wireless interfaces. The network interface may include standard wired or wireless interfaces (such as Wi-Fi). The memory may be high-speed random access memory (RAM) or non-volatile memory, such as disk storage. The memory may also be a storage device independent of the aforementioned processor. As a computer storage medium, the memory may include an operating system, a network communication module, a user interface module, and a traffic condition prediction program. The operating system is a program that manages and controls the hardware and software resources of a device, supporting the operation of the traffic condition prediction program and other software or programs. Those skilled in the art will understand that the device structure shown in FIG. 5 does not constitute a limitation on the traffic condition prediction device, and may include more or fewer components than shown, or combine certain components, or have different component arrangements.

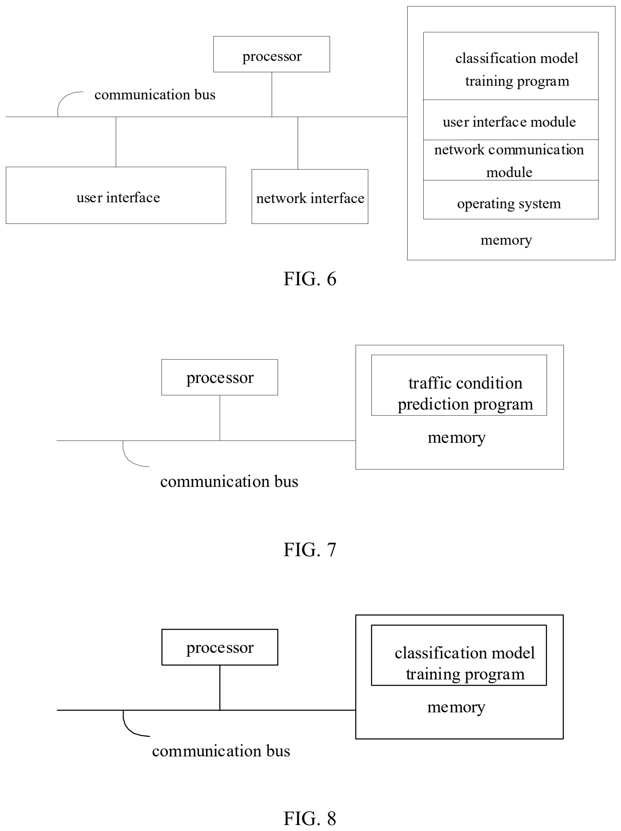

The embodiment of the present application also provides a classification model training device, which includes: a memory, a processor and a classification model training program stored in the memory and executable on the processor. When the classification model training program is executed by the processor, the steps of the classification model training method described in the above embodiments are implemented. In an embodiment, the classification model training device can be a line card device within a network element. In an embodiment, as shown in FIG. 6, the classification model training device may further include a network interface, a user interface, and a communication bus. The communication bus is used to enable communication between these components. The user interface may include a display and an input unit such as a keyboard. The user interface may also include standard wired or wireless interfaces. The network interface may include standard wired or wireless interfaces (such as a Wi-Fi interface). The memory can be high-speed RAM or stable, non-volatile memory, such as disk storage. The memory can also be a storage device independent of the aforementioned processor. As a computer storage medium, the memory can include an operating system, a network communication module, a user interface module and a classification model training program. The operating system is a program that manages and controls the hardware and software resources of the device, supporting the operation of the classification model training program and the other software or programs. Those skilled in the art will understand that the device structure shown in FIG. 6 does not constitute a limitation on the classification model training device, and may include more or fewer components than shown, or combine certain components, or have different component arrangements.

Referring to FIG. 7, the embodiment of the present application also proposes a computer-readable storage medium on which a traffic condition prediction program is stored. When the traffic condition prediction program is executed by a processor, the steps of the traffic condition prediction method described in the above embodiments are implemented. As shown in FIG. 7, in an embodiment, the memory as a computer-readable storage medium can communicate with the processor via a communication bus.

Referring to FIG. 8, the embodiment of the present application also proposes a computer-readable storage medium on which a classification model training program is stored. When the classification model training program is executed by a processor, the steps of the classification model training method described in the above embodiments are implemented. As shown in FIG. 8, in an embodiment, the memory, as a computer-readable storage medium, can communicate with the processor via a communication bus.

The various embodiments of the traffic condition prediction apparatus, prediction device, classification model training apparatus, training device, and computer-readable storage medium of the present application can all refer to the various embodiments of the traffic condition prediction method and classification model training method of the present application, and will not be repeated here.

In this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The sequence numbers of the embodiments in the present application are for descriptive purposes only and do not represent the superiority or inferiority of the embodiments.

Through the description of the above embodiments, those skilled in the art can clearly understand that the methods of the above embodiments can be implemented by means of software plus a necessary general-purpose hardware platform, and of course also by hardware, but in many cases the former is better implementation. Based on this understanding, the essence of the technical solution of the present application or the part that contributes to the prior art can be embodied in the form of software products, the computer software product is stored in one of the above storage medium (such as ROM/RAM, magnetic disk, optical disk), including several instructions to make a terminal device (which may be a mobile phone, a computer, a server, or a network device, etc.) execute the method of each embodiment of the present application.

The above are only some embodiments of the present application, and are not therefore limiting the scope of the present application. Any equivalent structure or equivalent process transformation made by using the contents of the specification and drawings of the present application, or directly or indirectly used in other related technical fields, is also included in the scope of the present application.

## Claims

1. A traffic condition prediction method, **characterized by** comprising:

    obtaining cell load data and user terminal handover data of a target cell during a target time period, wherein the target cell is a cell where signal covers a target road segment;
    constructing a target feature vector based on the cell load data and the user terminal handover data; and
    inputting the target feature vector into a preset classification model for identification to obtain a congestion level of the target road segment during the target time period, wherein the preset classification model is obtained by training using a feature vector constructed from the cell load data and the user terminal handover data as model input data and label data constructed from an actual congestion level of a road segment covered by a cell as a model training label.

2. The traffic condition prediction method according to claim 1, wherein after inputting the target feature vector into the preset classification model for identification to obtain the congestion level of the target road segment during the target time period, the method further comprises:
    in response to that the congestion level is greater than a preset level, adjusting a signal coverage range of a neighboring cell of the target cell, wherein an adjusted signal coverage range of the neighboring cell comprises part or all of the target road segment.

3. The traffic condition prediction method according to claim 1, wherein the cell load data comprises at least one of the following: average number of connected users under cell radio resource control, number of active users, uplink medium access control layer traffic, downlink medium access control layer traffic, and physical resource block utilization.

4. The traffic condition prediction method according to claim 1, wherein the user terminal handover data comprises at least one of the following: number of times a user terminal successfully enters the target cell, number of times the user successfully leaves the target cell, number of times the user requests to enter the target cell, and number of times the user requests to leave the target cell.

5. The traffic condition prediction method according to claim 3, wherein constructing the target feature vector based on the cell load data and the user terminal handover data comprises:

    preprocessing each data item in the cell load data and the user terminal handover data to obtain features corresponding to each data item; and
    combining the features corresponding to each data item to obtain the target feature vector.

6. The traffic condition prediction method according to any one of claims 1 to 5, wherein the preset classification model comprises an input layer, at least one hidden layer, and an output layer, and inputting the target feature vector into the preset classification model for identification to obtain the congestion level of the target road segment during the target time period comprises:

    inputting, via the input layer, the target feature vector into the hidden layer;
    processing, via the hidden layer, an input vector, and inputting a processed vector into the output layer; and
    identifying, via the output layer, the input vector to obtain the congestion level of the target road segment during the target time period.

7. The traffic condition prediction method according to claim 6, wherein processing, via the hidden layer, the input vector, and inputting the processed vector into the output layer comprises:

    linearly processing the input vector through a weight matrix of neurons in the hidden layer, and then activating a linearly processed vector through an activation function in the hidden layer; and
    inputting a vector obtained after activation processing of a last hidden layer into the output layer.

8. The traffic condition prediction method according to claim 6, wherein identifying, via the output layer, the input vector to obtain the congestion level of the target road segment during the target time period comprises:

    linearly processing the input vector through a weight matrix of neurons in the output layer to obtain a output value corresponding to each preset congestion level;
    normalizing the output value corresponding to each preset congestion level through a normalization function in the output layer to obtain a probability that the target road segment belongs to each preset congestion level during the target time period; and
    determining the congestion level of the target road segment during the target time period from each preset congestion level based on the probability.

9. A classification model training method, **characterized by** comprising:

obtaining a sample dataset, wherein the sample dataset comprises a plurality of sample data, each piece of sample data comprises cell load data and user terminal handover data of a cell during a time period, and an actual congestion level of a road segment covered by a cell signal; constructing a feature vector based on the cell load data and the user terminal handover data in each piece of sample data, and constructing label data based on the actual congestion level in each piece of sample data; and training a classification mode to be trained using the feature vector corresponding to each piece of sample data are used as model input data and the label data corresponding to each piece of sample data as a model training label to obtain a target classification model for predicting a road congestion level.

10. A computer-readable storage medium, **characterized in that** a traffic condition prediction program is stored on the computer-readable storage medium, wherein when the traffic condition prediction program is executed by a processor, the traffic condition prediction method according to any one of claims 1 to 7 is implemented.

obtaining cell load data and user terminal handover data of a target cell during a target time period, the target cell is a cell where a signal covers a target road segment — S10

constructing a target feature vector based on the cell load data and the user terminal handover data — S20

inputting the target feature vector into a preset classification model for identification to obtain the congestion level of the target road segment during the target time period. The preset classification model is obtained by training using the feature vector constructed from the load data and user terminal handover data of the cell as model input data and label data constructed from the actual congestion level of the road segment covered by the cell as a model training label — S30

FIG. 1

obtaining cell load data and user terminal handover data of a target cell during a target time period, the target cell is a cell where a signal covers a target road segment — S10

constructing a target feature vector based on the cell load data and the user terminal handover data — S20

inputting the target feature vector into a preset classification model for identification to obtain the congestion level of the target road segment during the target time period. The preset classification model is obtained by training using the feature vector constructed from the load data and user terminal handover data of the cell as model input data and label data constructed from the actual congestion level of the road segment covered by the cell as a model training label — S30

in response to that the congestion level is greater than a preset level, adjusting the signal coverage range of the neighboring cells of the target cell, the adjusted signal coverage range of the neighboring cells includes part or all of the target road segment — S40

FIG. 2

obtaining a sample dataset, the sample dataset includes multiple sample data. Each sample data includes the cell load data and the user terminal handover data for a cell during a time period, as well as the actual congestion level of the road segment covered by the cell signal — A10

constructing feature vectors based on the cell load data and the user terminal handover data in each piece of sample data, and constructing label data based on the actual congestion level in each piece of sample data — A20

training the classification model to be trained using the feature vector corresponding to each piece of sample data as model input data and the label data corresponding to each piece of sample data as a model training label obtain the target classification model for predicting road congestion levels — A30

## FIG. 3

input congestion feature vector of cell

congestion level label

input layer      hidden layer      output layer

## FIG. 4

processor

communication bus

traffic condition prediction program

user interface module

network communication module

operating system

user interface

network interface

memory

## FIG. 5

processor

communication bus

user interface

network interface

classification model training program

user interface module

network communication module

operating system

memory

FIG. 6

processor

traffic condition prediction program

memory

communication bus

FIG. 7

processor

classification model training program

memory

communication bus

FIG. 8

## INTERNATIONAL SEARCH REPORT

| International application No. |
|---|
| **PCT/CN2024/087322** |

| A. | CLASSIFICATION OF SUBJECT MATTER |
|---|---|

G08G1/01(2006.01)i

According to International Patent Classification (IPC) or to both national classification and IPC

| B. | FIELDS SEARCHED |
|---|---|

Minimum documentation searched (classification system followed by classification symbols)

IPC:G08G1/-

Documentation searched other than minimum documentation to the extent that such documents are included in the fields searched

Electronic data base consulted during the international search (name of data base and, where practicable, search terms used)

CNTXT, ENTXTC, WPABSC, ENTXT, DWPI: 交通, 拥堵, 堵车, 状况, 级别, 等级, 终端, 手机, 通信, 数据, 负荷, 切换, 流量, 用户数, 特征, 向量, 分类, 分级, 模型, traffic, congestion, jam, condition, grade, level, terminal, phone, communicate, data, load, switch, flow, user, number, quantity, eigenvector, feature, vector, classify, model

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 105389986 A (WELLONG ETOWN INTERNATIONAL LOGISTICS CO., LTD. et al.) 09 March 2016 (2016-03-09)<br>description, paragraphs 0052-0076, and figures 1-2 | 1-10 |
| A | CN 104200667 A (SHANGHAI MEIHUI SOFTWARE CO., LTD.) 10 December 2014 (2014-12-10)<br>entire document | 1-10 |
| A | CN 104318770 A (SHANGHAI SINOCLOUDBASE INFORMATION TECHNOLOGY CO., LTD.) 28 January 2015 (2015-01-28)<br>entire document | 1-10 |
| A | CN 106781501 A (SHANDONG INSPUR BUSINESS SYSTEM CO., LTD.) 31 May 2017 (2017-05-31)<br>entire document | 1-10 |
| A | CN 108932838 A (HITACHI, LTD. et al.) 04 December 2018 (2018-12-04)<br>entire document | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2024** | **14 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/087322** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109243175 A (GUANGZHOU RICHSTONE TECHNOLOGY CO., LTD.) 18 January 2019 (2019-01-18)<br>    entire document | 1-10 |
| A | CN 113538898 A (NANJING MEIHUI SOFTWARE CO., LTD.) 22 October 2021 (2021-10-22)<br>    entire document | 1-10 |
| A | US 2007208497 A1 (INRIX, INC.) 06 September 2007 (2007-09-06)<br>    entire document | 1-10 |

Form PCT/ISA/210 (second sheet) (July 2022)

## INTERNATIONAL SEARCH REPORT
### Information on patent family members

International application No.

**PCT/CN2024/087322**

| Patent document cited in search report | | | Publication date (day/month/year) | Patent family member(s) | | | Publication date (day/month/year) |
|---|---|---|---|---|---|---|---|
| CN | 105389986 | A | 09 March 2016 | CN | 105389986 | B | 24 April 2018 |
| CN | 104200667 | A | 10 December 2014 | CN | 104200667 | B | 27 July 2016 |
| CN | 104318770 | A | 28 January 2015 | CN | 104318770 | B | 01 February 2017 |
| CN | 106781501 | A | 31 May 2017 | | None | | |
| CN | 108932838 | A | 04 December 2018 | | None | | |
| CN | 109243175 | A | 18 January 2019 | | None | | |
| CN | 113538898 | A | 22 October 2021 | | None | | |
| US | 2007208497 | A1 | 06 September 2007 | US | 2011112747 | A1 | 12 May 2011 |
| | | | | US | 7899611 | B2 | 01 March 2011 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310770982